# EUROPÄISCHE PATENTSCHRIFT

(11) **EP 2 764 387 B1**
(45) Veröffentlichungstag und Bekanntmachung des Hinweises auf die Patenterteilung: **27.01.2021**
(21) Anmeldenummer: 12751072.5
(22) Anmeldetag: 28.08.2012
(51) Int. Cl.: G02B 6/38, G02B 6/44, H02G 15/007

(54) **KABELZUGENTLASTUNG FÜR KABEL, INSBESONDERE FIBEROPTISCHE KABEL**
CABLE STRAIN RELIEF FOR CABLES, IN PARTICULAR FIBER OPTIC CABLES
SYSTÈME DE DÉCHARGE DE TRACTION POUR CÂBLES, EN PARTICULIER POUR CÂBLES OPTIQUES

(30) Priorität: 06.10.2011 CH 16382011
(43) Veröffentlichungstag der Anmeldung: 13.08.2014
(73) Patentinhaber: HUBER+SUHNER AG, 9100 Herisau (CH)
(72) Erfinder: SCOPIC, Nesa, 9100 Herisau (CH); GREUB, Daniel, 9000 St. Gallen (CH); ZAINA, Patrick, 9200 Gossau (CH); GADMER, Laif, 9240 Uzwil (CH)
(74) Vertreter: Rentsch Partner AG
(86) Internationale Anmeldenummer: PCT/EP2012/066645
(87) Internationale Veröffentlichungsnummer: WO 2013/050202

(56) Entgegenhaltungen:
- DE-C1- 19 838 125
- US-B1- 6 238 104
- US-B1- 6 382 844

## Beschreibung

Die Erfindung liegt auf dem Gebiet der Kabelzugentlastungen für Kabel, insbesondere fiberoptische Kabel.

Aus dem Stand der Technik sind gecrimpte Kabelzugentlastungen für optische Verbinder bekannt. Diese verwenden Crimphülsen, welche auf den Kabeldurchmesser angepasst sind. Um ein Kabel mit einem Crimphals mechanisch zu verbinden, werden unter dem Kabelaussenmantel angeordnete Fasern mittels einer auf den Kabelaussendurchmesser angepasste Crimphülse gegen den verbinderseitigen Crimphals gepresst. Bei den Crimphülsen handelt es sich um gedrehte oder tiefgezogene Teile. Ein Nachteil der aus dem Stand der Technik bekannten Lösungen besteht darin, dass für jeden Kabeldurchmesser an diesen angepasste Crimphülsen erforderlich sind. Ein weiterer Nachteil besteht darin, dass die aus dem Stand der Technik bekannten Lösungen einen separaten Knickschutz erfordern.

WO2009/042066 (US7942587) von Corning Cable Systems LLC wurde am 2. April 2009 publiziert und beschreibt eine vergleichsweise komplizierte, gecrimpte Kabelzugentlastung zum Anschliessen eines fiberoptischen Kabels an einen Verbinder. Im Unterschied zum Stand der Technik wird zur Verbesserung der Zugentlastung eine mit Rillen versehene Zwischenhülse unter die Crimphülse geklemmt, um das Festklemmen der für die Zugentlastung zuständigen kabelseitigen Litzen zu verbessern. Ein Nachteil besteht darin, dass der Kabelmantel nicht festgehalten wird, so dass Zugkräfte ausschliesslich durch die Litzen abgefangen werden müssen. Eine zusätzliche Knickschutztülle ist zwingend notwendig.

US 6 382 844 und US 6 238 104 offenbaren jeweils Kabelzugentlastungen mit einer Crimphülse und einer inneren Hülse, die eine mechanische Wirkverbindung zwischen dem Außenmantel des Kabels und der Crimphülse herstellen.

Die aus dem Stand der Technik bekannten Konfektionierungsmethoden sind entweder aufwendig und daher kostenintensiv oder erfüllen den gewünschten Qualitätsstandard in Bezug auf Zugentlastung nur ungenügend. Um eine aus dem Stand der Technik bekannte zweifache Zugentlastung herzustellen, ist entweder ein mehrfacher Crimpvorgang oder aber ein abgestuftes Spezialwerkzeug erforderlich. Auch in diesem Fall erfordert jede Kabelgrösse ein abgestimmtes Bauteil und entsprechende Werkzeuge.

Eine Aufgabe der Erfindung besteht darin, eine verbesserte Crimpverbindung für Kabel, insbesondere optische Kabel zu zeigen, welche die aus dem Stand der Technik bekannten Nachteile nicht aufweist.

Die Aufgabe wird durch die in den Patentansprüchen definierte Vorrichtung und das dazugehörige Verfahren gelöst.

Die bekannten Technologien zur Montage eines Steckverbinders an einem Glasfaserkabel in Crimptechnik ist in der Regel sehr arbeitsintensiv. Um das Kabel auf Zug zu sichern, wird ein kabelseitiges Fasergeflecht mittels einer Crimphülse an einem verbinderseitigen Crimphals festgeklemmt. Je nach Kabeltyp handelt es sich beim Fasergeflecht üblicherweise um Kevlar-, respektive Aramidfasern, oder andere leitende oder nichtleitende Fasern, welche unter einem äusseren Kabelmantel angeordnet sind.

Häufig wird in einem weiteren Arbeitsschritt auch der Kabelmantel unter einem Ende der Crimphülse eingeklemmt. Zusätzlichen mechanischen Schutz bietet eine am Stecker/Kabelübergang auf die Crimphülse aufgeschobene Knickschutztülle, welche das Kabel hinter der Crimphülse seitlich gegen ungewolltes Abknicken stützt. Die Crimphülse wird in der Regel als Drehteil hergestellt und kann eine Schulter für die Festhaltung des Kabelmantels aufweisen. Alternativ werden Crimphülsen als Tiefziehteile hergestellt. Sie können z.B. eine oder mehrere innen liegende Nuten aufweisen.

Die Erfindung betrifft eine Kabelzugentlastung gemäß Anspruch 1 sowie ein Verfahren zur Herstellung einer Kabelzugentlastung gemäß Anspruch 10. Vorteilhafte Weiterbildungen sind in den abhängigen Ansprüchen 2-9 definiert.

In einer Ausführungsform der Erfindung wird eine zylindrische Crimphülse aus einem plastisch deformierbaren Material, z.B. Metall, in Kombination mit einer Hülse aus einem weicheren Material, z.B. Kunststoff, verwendet. Das für die Zugentlastung zuständige Fasergewebe (z.B. Aramidlitzen) wird auf dem Crimphals (Steckerkörper) unter der Metallhülse eingeklemmt. Im gleichen Crimpvorgang wird die Hülse aus dem weicheren Material (Kunststoffhülse) auf den Kabelmantel gecrimpt. Die Kunststoffhülse wird über die Crimphülse auf den Kabelmantel gepresst und weist mit Vorteil innenliegende Stege oder Noppen auf, welche sich dabei mit dem Kabelmantel verkrallen. Die Kunststoffhülse kann beispielsweise an einem Ende in die Metallhülse eingeschoben oder eingepresst werden. Eine Möglichkeit besteht darin, dass die Kunststoffhülse beim Spritzgiessen mit der Crimphülse wirkverbunden wird.

Beim Crimpvorgang werden sowohl eine Zugentlastung über das Fasergeflecht als auch eine Zugentlastung über den Kabelmantel hergestellt, wobei die Kunststoffhülse auch als Knickschutz dienen kann. Ein Vorteil besteht darin, dass das gleiche Crimpwerkzeug und die gleiche Crimphülse, respektive der gleiche Crimphals für unterschiedliche Kabeldurchmesser verwendet werden können. Für unterschiedliche Kabeldurchmesser muss lediglich die vergleichsweise kostengünstige Kunststoffhülse ausgetauscht werden. Dies wirkt sich positiv auf die Herstellungskosten aus.

Eine bevorzugte Ausführungsform einer erfindungsgemässen Kabelzugentlastung umfasst eine Crimphülse zum mechanischen Wirkverbinden eines Kabels mit einem Crimphals, wobei die Crimphülse im gecrimpten Zustand zum Einklemmen eines für die Zugentlastung vorgesehen Fasergeflechtes des Kabels zwischen der Crimphülse und dem Crimphals dient. Das Fasergeflecht befindet sich normalerweise innerhalb des Kabelmantels. Je nach Anwendungsgebiet kann es sich beim Fasergeflecht z.B. um Aramid-, respektive Kevlarfasern und/oder um elektrisch leitfähige (metallische) Fasern handeln, welche gleichzeitig als Aussenleiter dienen. Die Crimphülse weist an ihrem kabelseitigen Ende eine deformierbare Kunststoffhülse auf, die im gecrimpten Zustand eine mechanische Wirkverbindung zwischen dem Aussenmantel des Kabels und der Crimphülse herstellt. Der Durchmesser der Kunststoffhülse ist auf den Aussenmantel des Kabels abgestimmt. Bei Bedarf kann die Kunststoffhülse mehrteilig ausgestaltet sein, z.B. so dass sie auf den Kabeldurchmesser anpassbar ist. Die Kunststoffhülse kann austauschbar ausgestaltet sein, so dass z.B. Kunststoffhülsen mit unterschiedlichem Innendurchmesser oder Wirkverbindungsmitteln in die Crimphülse eingesetzt werden können. Bei Bedarf kann die Kunststoffhülse auch fest mit der Crimphülse wirkverbunden sein.

Die Kunststoffhülse kann im Innern Wirkverbindungsmittel aufweisen, welche in gecrimpten Zustand mit dem Kabelaussenmantel in Wirkverbindung treten und zur Erhöhung der Traktion (Auszugskraft) dienen. Die Kunststoffhülse ist mit Vorteil aus einem weicheren Material hergestellt als die Crimphülse. In gewissen Anwendungsgebieten kann die Kunststoffhülse geschlitzt ausgestaltet sein, so dass sie z.B. von der Seite her auf das Kabel aufgesetzt oder spiralförmig aufgewunden werden kann. Die Kunststoffhülse kann an ihrem hinteren Ende eine angeformte oder als separates Teil ausgestaltete Knickschutztülle aufweisen, welche sich in Kabellängsrichtung erstreckt und ein ungewolltes Knicken des Kabels verhindert. Die Kunststoffhülse wird mit Vorteil durch Spritzgiessen hergestellt. Die Kunststoffhülse kann durch Spritzgiessen mit der Crimphülse wirkverbunden werden, z.B. indem die Crimphülse in die Spritzgiessform eingelegt und dann umspritzt wird. Die Kunststoffhülse kann in die Crimphülse eingepresst, eingeschweisst oder eingeklebt werden. Bei Bedarf kann die Kunststoffhülse eine Dichtung aufweisen, welche in wirkverbundenem Zustand mit dem Kabelmantel dicht zusammenwirkt und so ein ungewolltes Eindringen von Feuchtigkeit oder Schmutz in den Verbinder verhindert. Die Kunststoffhülse kann einen mehrteiligen Aufbau aufweisen. Z.B. kann die Kunststoffhülse aus einer härteren Materialkomponente bestehen, welche zum Herstellen der mechanischen Wirkverbindung dient. Eine oder mehrere andere, z.B. weichere Materialkomponente kann eine Knickschutztülle und/oder eine Dichtung gegenüber dem Kabelmantel bilden.

Ein Verfahren zum Herstellen einer erfindungsgemässen Kabelzugentlastung weist in der Regel folgende Schritte auf (die Reihenfolge gewisser Schritte kann bei Bedarf geändert werden):
(a) Eine Kunststoffhülse wird auf den Kabelmantel aufgeschoben;
(b) Eine Crimphülse wird auf den Kabelmantel aufgeschoben;
(c) Das Fasergeflecht wird auf einer definierten Länge vom Kabelmantel befreit;
(d) Das Fasergeflecht wird auf dem Crimphals verteilt angeordnet;
(e) Die Crimphülse und die Kunststoffhülse werden miteinander wirkverbunden über dem Crimphals, respektive auf dem Kabelmantel angeordnet;
(f) Die Crimphülse wird auf den Crimphals aufgecrimpt, gleichzeitig wird die Kunststoffhülse mit dem Kabelmantel wirkverbunden.

Ein Aspekt der Erfindung umfasst einen Ausrüstsatz (Kit) zur Herstellung einer erfindungsgemässen Kabelzugentlastung. In diesem Kit enthalten sind unterschiedliche Kunststoffhülsen (z.B. unterschiedliche Innendurchmesser, unterschiedliche Wirkverbindungsmittel, mit oder ohne Knickschutz, unterschiedliche Farben, unterschiedliche Materialien). Bei der Montage können die Kunststoffhülsen mit der Crimphülse verbunden werden. Ein Vorteil besteht darin, dass in der Regel nur Crimphülsen mit einem Durchmesser erforderlich sind um Kabel, mit unterschiedlichen Durchmessern wirkverbinden zu können.

Anhand der in den nachfolgenden Figuren gezeigten Ausführungsbeispiele und der dazugehörigen Beschreibung wird die Erfindung näher erläutert. Es zeigen:
- Fig. 1: eine erfindungsgemässe Kabelzugentlastung in einer Draufsicht;
- Fig. 2: zeigt die Kabelzugentlastung gemäss Figur 1 in einer Schnittdarstellung entlang der Schnittlinie DD;
- Fig. 3: zeigt die Kabelzugentlastung gemäss Figur 1 teilweise geschnitten in einer perspektivischen Darstellung von schräg oben;
- Fig. 4: zeigt die Bestandteile einer Kabelzugentlastung gemäss Figur 1 in einer perspektivischen Explosionsdarstellung von schräg oben.

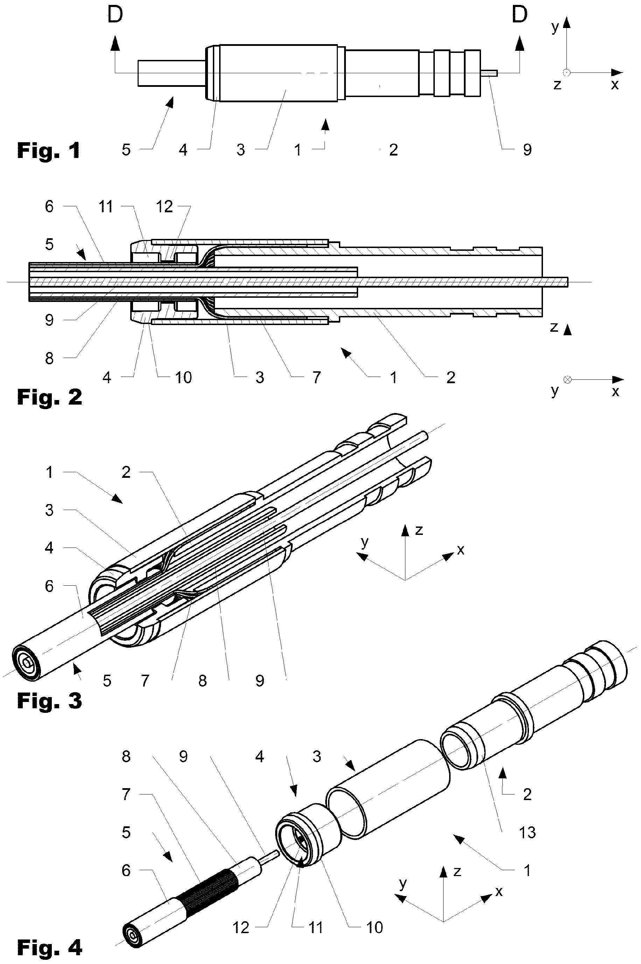

**Figur 1** zeigt schematisch eine erfindungsgemässe Kabelzugentlastung 1 in einer Draufsicht in montiertem Zustand. **Figur 2** zeigt die Crimpverbindung 1 in einer Schnittdarstellung entlang der Schnittlinie DD gemäss Figur 1. **Figur 3** zeigt die Crimpverbindung 1 in einer perspektivischen Darstellung von schräg oben. Die Crimpverbindung ist teilweise geschnitten dargestellt, so dass das Innenleben sichtbar wird. **Figur 4** zeigt die Crimpverbindung 1 gemäss der vorangehenden Figuren in einer Explosionsdarstellung.

Die Kabelzugentlastung 1 wird durch einen Crimphals 2 gebildet, der in wirkverbundenem Zustand mit einer Crimphülse 3 zusammenwirkt. Der Crimphals 2 ist typischerweise Bestandteil eines Verbinders oder einer anderen Baugruppe oder direkt oder indirekt mit diesen Wirkverbunden. Im Bereich des hinteren, kabelseitigen Endes weist die Crimphülse 3 eine eingesetzte Kunststoffhülse 4 auf, welche in der gezeigten Ausführungsform teilweise in die Crimphülse 3 hineinragt. Ein Kabel 5 weist einen Kabelmantel 6 auf, der ein Fasergeflecht 7 umgibt. Das Fasergeflecht 7 ist auf einem Innenrohr 8 angeordnet. Im Innern des Innenrohres 8 verläuft ein Lichtleiter 9.

Im montiertem Zustand (gemäss den **Figuren 1** bis **3**) ist das Fasergeflecht 7 zwischen dem Crimphals 2 und der auf diesen aufgepressten Crimphülse 3 eingeklemmt, so dass eine mechanische Wirkverbindung zwischen dem Kabel 5 und dem Crimphals 2 resultiert, welche als Zugentlastung dient. Gleichzeitig ist die Kunststoffhülse 4 mit dem Kabelmantel 6 wirkverbunden.

Wie in **Figur 2** zu erkennen ist, ist die Kunststoffhülse 4 bis zu einem mechanischen Anschlag (vorstehender Rand) 10 in die Crimphülse 3 eingeschoben. Die Crimphülse 3 weist eine koaxial verlaufende durchgehende Öffnung 11 auf, deren Durchmesser auf den Aussendurchmesser des Kabels 5 abgestimmt ist. In der Öffnung 11 ist eine nach innen vorstehende Verzahnung 12 zu erkennen, welche im gecrimpten Zustand mit dem Kabelmantel 6 verzahnt und diesen in definiertem Mass auf Zug entlastet.

Die Crimphülse 3 und der Crimphals 2 sind zum Anschliessen von unterschiedlichen Kabeldurchmessern geeignet. Bei Bedarf kann eine Klemmfläche 13 des Crimphalses 2 traktionserhöhende Elemente, z.B. in Form von Rillen oder anderen vorstehenden Elementen aufweisen.

Wie in der Explosionsdarstellung gemäss **Figur 4** zu erkennen ist, wird bei der Montage die Kunststoffhülse 4 mit der Crimphülse 3 auf das Kabel 5 aufgeschoben. Vorher oder nachher wird das Fasergeflecht 7 in einem Bereich vom Kabelmantel 6 befreit. Anschliessend wird das Fasergeflecht 7 auf der Klemmfläche 13 des Crimphalses 2 angeordnet und dann die Crimphülse 3 mit der Kunststoffhülse 4 über das Fasergeflecht 7 und den Crimphals geschoben und in einem Schritt mit diesen verpresst. Durch das Verpressen der Crimphülse 3 wird die Kunststoffhülse 4 mit dem Kabelmantel 6 verzahnt.

### BEZUGSZEICHEN

- 1: Kabelzugentlastung
- 2: Crimphals
- 3: Crimphülse
- 4: Kunststoffhülse
- 5: Kabel
- 6: Kabelmantel
- 7: Fasergeflecht
- 8: Innenrohr
- 9: Lichtleiter
- 10: Anschlag (vorstehender Rand)
- 11: Öffnung (Kunststoffhülse)
- 12: Verzahnung
- 13: Klemmfläche

## Patentansprüche

1. Kabelzugentlastung (1) mit einer Crimphülse (3) zum mechanischen Wirkverbinden eines Kabels (5) mit einem Crimphals (2), wobei die Crimphülse (3) im gecrimpten Zustand zum Einklemmen eines für die Zugentlastung vorgesehen Fasergeflechtes (7) des Kabels (5) zwischen der Crimphülse (3) und dem Crimphals (2) dient, **dadurch gekennzeichnet, dass** die Crimphülse (3) an ihrem kabelseitigen Ende eine in die Crimphülse (3) eingesetzte deformierbare Kunststoffhülse (4) aufweist, die im gecrimpten Zustand eine mechanische Wirkverbindung zwischen einem Aussenmantel (6) des Kabels (5) und der Crimphülse (3) herstellt, wobei die Crimphülse zylindrisch ist und im gleichen Crimpvorgang das Fasergeflecht (7) unter der Crimphülse (2) einklemmbar und die deformierbare Kunststoffhülse auf den Kabelmantel crimpbar ist.

2. Kabelzugentlastung (2) gemäss Patentanspruch 1, **dadurch gekennzeichnet, dass** der Innendurchmesser der Kunststoffhülse (4) auf den Durchmesser des Aussenmantels (6) des Kabels (5) abgestimmt ist.

3. Kabelzugentlastung (1) gemäss einem der vorangehenden Patentansprüche, **dadurch gekennzeichnet, dass** die Kunststoffhülse (4) austauschbar gestaltet ist.

4. Kabelzugentlastung (1) gemäss einem der vorangehenden Patentansprüche, **dadurch gekennzeichnet, dass** die Kunststoffhülse (4) im Innern Wirkverbindungsmittel (12) aufweist, welche in gecrimpten Zustand mit dem Kabelaussenmantel (6) in Wirkverbindung treten.

5. Kabelzugentlastung (1) gemäss einem der vorangehenden Patentansprüche, **dadurch gekennzeichnet, dass** die Kunststoffhülse (4) aus einem weicheren Material besteht als die Crimphülse (3).

6. Kabelzugentlastung (1) gemäss einem der vorangehenden Patentansprüche, **dadurch gekennzeichnet, dass** die Kunststoffhülse (4) geschlitzt ausgestaltet ist.

7. Kabelzugentlastung (1) gemäss einem der vorangehenden Patentansprüche, **dadurch gekennzeichnet, dass** die Kunststoffhülse (4) an ihrem hinteren Ende eine Knickschutztülle aufweist.

8. Kabelzugentlastung (1) gemäss einem der vorangehenden Patentansprüche, **dadurch gekennzeichnet, dass** die Kunststoffhülse (4) durch Spritzgiessen mit der Crimphülse (3) wirkverbunden ist.

9. Kabelzugentlastung (1) gemäss einem der Patentansprüche 1 bis 7, **dadurch gekennzeichnet, dass** die Kunststoffhülse (4) in die Crimphülse (3) eingepresst, eingeschweisst oder eingeklebt ist.

10. Verfahren zur Herstellung einer Kabelzugentlastung (1) gemäss einem der vorangehenden Patentansprüche, wobei das Verfahren folgende Schritte aufweist:
a. Eine Kunststoffhülse (4) wird auf einen Kabelmantel (6) aufgeschoben;
b. Eine zylindrische Crimphülse (3) wird auf den Kabelmantel (6) aufgeschoben, wobei die Kunststoffhülse (4) im aufgeschobenen Zustand in die Crimphülse (3) eingesetzt ist;
c. Ein unter dem Kabelmantel (6) angeordnetes Fasergeflecht (7) wird auf einer definierten Länge vom Kabelmantel (6) befreit;
d. Das Fasergeflecht wird auf einer Klemmfläche (13) eines Crimphalses (2) verteilt angeordnet;
e. Die Crimphülse (3) und die Kunststoffhülse (4) werden miteinander wirkverbunden über dem Crimphals (2), respektive dem Kabelmantel (6) angeordnet;
f. Die Crimphülse (3) wird auf den Crimphals (2) aufgecrimpt, wobei im gleichen Arbeitsschritt die Kunststoffhülse (4) auf den Kabelmantel (6) gecrimpt wird.

## Claims

1. A cable strain relief (1) with a crimp sleeve (3) for the mechanical operative connection of a cable (5) with a crimp collar (2), wherein in the crimped state the crimp sleeve (3) serves to clamp a fibre braid (7) of the cable (5), provided for strain relief, between the crimp sleeve (3) and the crimp collar (2), **characterised in that** at its cable-side end the crimp sleeve (3) has a deformable plastic sleeve (4), which is inserted into the crimp sleeve (3), and, in the crimped state, produces a mechanical operative connection between an outer sheath (6) of the cable (5) and the crimp sleeve (3), wherein the crimp sleeve is cylindrical, and in the same crimping operation the fibre braid (7) can be clamped under the crimp sleeve (2), and the deformable plastic sleeve can be crimped onto the cable sheath.

2. The cable strain relief (2) according to claim 1, **characterised in that** the inner diameter of the plastic sleeve (4) is matched to the diameter of the outer sheath (6) of the cable (5).

3. The cable strain relief (1) according to one of the preceding claims, **characterised in that** the plastic sleeve (4) is configured to be replaceable.

4. The cable strain relief (1) according to one of the preceding claims, **characterised in that** in its interior the plastic sleeve (4) has operative connection means (12), which in the crimped state enter into an operative connection with the cable outer sheath (6).

5. The cable strain relief (1) according to one of the preceding claims, **characterised in that** the plastic sleeve (4) consists of a softer material than the crimp sleeve (3).

6. The cable strain relief (1) according to one of the preceding claims, **characterised in that** the plastic sleeve (4) is designed in a slitted manner.

7. The cable strain relief (1) according to one of the preceding claims, **characterised in that** at its rear end the plastic sleeve (4) has an anti-kink grommet.

8. The cable strain relief (1) according to one of the preceding claims, **characterised in that** the plastic sleeve (4) is operatively connected to the crimp sleeve (3) by means of injection moulding.

9. The cable strain relief (1) according to one of claims 1 to 7, **characterised in that** the plastic sleeve (4) is pressed, welded, or adhesively bonded into the crimp sleeve (3).

10. A method for the manufacture of a cable strain relief (1) according to one of the preceding claims, wherein the method includes the following steps:
a. a plastic sleeve (4) is pushed onto a cable sheath (6);
b. a cylindrical crimp sleeve (3) is pushed onto the cable sheath (6), wherein in the pushed-on state the plastic sleeve (4) is inserted into the crimp sleeve (3);
c. a fibre braid (7), arranged under the cable sheath (6), is freed from the cable sheath (6) over a defined length;
d. the fibre braid is distributed on a clamping surface (13) of a crimp collar (2);
e. the crimp sleeve (3) and the plastic sleeve (4) are arranged operatively coupled with each other over the crimp collar (2) and the cable sheath (6) respectively, and;
f. the crimp sleeve (3) is crimped onto the crimp collar (2), wherein in the same operative step the plastic sleeve (4) is crimped onto the cable sheath (6).

## Revendications

1. Serre-câble (1) comportant un manchon de sertissage (3) pour le raccordement mécanique opérationnel d'un câble (5) avec un col de sertissage (2), dans lequel le manchon de sertissage (3) à l'état serti sert pour le serrage d'une tresse de fibre (7) destinée à la décharge de traction du câble (5) entre le manchon de sertissage (3) et le col de sertissage (2), **caractérisé en ce que** le manchon de sertissage (3) comporte un manchon en matière plastique déformable (4) inséré dans le manchon de sertissage (3) à son extrémité du côté câble, qui, à l'état serti, crée une connexion opérationnelle mécanique entre une gaine extérieure (6) du câble (5) et du manchon de sertissage (3), dans lequel le manchon de sertissage est cylindrique et dans le même processus de sertissage la tresse de fibre (7) peut être serrée sous le manchon de sertissage (2) et le manchon plastique déformable peut être serti sur la gaine du câble.

2. Serre-câble (2) selon la revendication 1, **caractérisé en ce que** le diamètre intérieur du manchon en plastique (4) est adapté au diamètre de la gaine extérieure (6) du câble (5).

3. Serre-câble (1) selon une des revendications précédentes, **caractérisé en ce que** le manchon en matière plastique (4) est conçu pour être interchangeable.

4. Serre-câble (1) selon une des revendications précédentes, **caractérisé en ce que** le manchon en matière plastique (4) comporte des moyens de raccordement opérationnels (12) à l'intérieur, qui, à l'état serti, viennent en raccordement opérationnel avec la gaine de câble externe (6).

5. Serre-câble (1) selon une des revendications précédentes, **caractérisé en ce que** le manchon en matière plastique (4) est constitué d'un matériau plus tendre que le manchon de sertissage (3).

6. Serre-câble (1) selon une des revendications précédentes, **caractérisé en ce que** le manchon en matière plastique (4) est destiné à être fendu.

7. Serre-câble (1) selon une des revendications précédentes, **caractérisé en ce que** le manchon en matière plastique (4) présente un manchon de protection contre le pliage à son extrémité arrière.

8. Serre-câble (1) selon une des revendications précédentes, **caractérisé en ce que** le manchon en plastique (4) est relié fonctionnellement au manchon de sertissage (3) par moulage par injection.

9. Serre-câble (1) selon une des revendications 1 à 7, **caractérisé en ce que** le manchon en matière plastique (4) est embouti, soudé ou collé dans le manchon de sertissage (3).

10. Procédé de fabrication d'un serre-câble (1) selon une des revendications précédentes, le procédé comprenant les étapes suivantes:
a. un manchon en plastique (4) est poussé sur une gaine de câble (6);
b. un manchon de sertissage cylindrique (3) est poussé sur la gaine de câble (6), dans lequel le manchon en plastique (4) à l'état enfoncé est inséré dans le cylindre de sertissage (3);
c. une tresse de fibre (7) disposée sous la gaine de câble (6) est dénudée de la gaine de câble (6) sur une longueur définie;
d. la tresse de fibre est répartie sur une surface de serrage (13) d'un col de sertissage (2);
e. le manchon de sertissage (3) et le manchon en matière plastique (4) sont disposés en étant reliés opérationnellement l'un à l'autre via le col de sertissage (2) ou la gaine de câble (6);
f. le manchon de sertissage (3) est serti sur le col de sertissage (2), dans lequel le manchon en plastique (4) est serti sur la gaine de câble (6) dans la même étape de travail.
